# EUROPEAN PATENT APPLICATION

(11) **EP 1 452 351 A2**
(43) Date of publication of application: **01.09.2004**
(21) Application number: 04250669.1
(22) Date of filing: 09.02.2004
(51) Int. Cl.: B60G 15/06

(54) **MacPherson strut assembly**

(30) Priority: 28.02.2003 US 375971
(71) Applicant: ArvinMeritor Technology, LLC, Troy, MI 48084 (US)
(72) Inventor: Bottene, Marlon, Oxford, Michigan 48371 (US); Fader, Joseph, Brighton Michigan 48114 (US); Saieg, Steven, Sterling Heights Michigan 48310 (US); Doyle, Stephen, Northville Michigan 48167 (US); Williams, Monte, Royal Oak Michigan 48073 (US); Lasic, George, Brampton Ontario L6W 1G6 (CA); King, Thomas, Milton Ontario L9T 4M8 (CA)
(74) Representative: Jones, Colin

(57) **Abstract**

A MacPherson strut assembly (10) is provided that has a hydraulic cylinder (12) with a fluid chamber. A piston (14) is arranged in the chamber, and a rod (16) extends from the piston. A lower spring seat (20) is supported on the hydraulic cylinder, and an upper spring seat (18) is supported on the rod. A coil spring (26) is arranged between the spring seats to produce a desired spring loading. In one embodiment, a compliant isolator (24) having a sloped profile (32) is arranged on the lower spring seat to produce an uneven spring loading. In another embodiment, a spring seat isolator (39) may include materials of a different stiffness to produce uneven spring loading. An isolator (56, 58) may also be used between coils of the spring so that the compression on one side of the spring is limited more that the opposite side to produce uneven loading.

## Description

### BACKGROUND OF THE INVENTION

This invention relates to a MacPherson strut assembly, and more particularly, the invention relates to spring seat isolators for supporting a spring of a MacPherson strut assembly.

MacPherson struts are used in many suspension systems and are arranged between the frame and a lower control arm. A wheel end is attached to the strut at the lower control arm. The strut includes a hydraulic cylinder with a fluid chamber, and a piston is arranged in the chamber for moving through the fluid and damping the motion of the wheel end. A rod is attached to the piston and extends from the hydraulic cylinder. A coil spring is arranged between an upper spring seat supported on the rod and a lower spring seat supported on the hydraulic cylinder. The spring provides a desired spring rate for the wheel end.

The geometry of a typical MacPherson strut produces moments that generate an undesirable side load between the piston and rod and the hydraulic cylinder resulting in a strut that "sticks" during operation. To reduce or eliminate the side loading, prior art struts have attempted to produce an uneven loading of the coil spring so that a greater load is produced on one side than the other side. The uneven loading generates a moment that counteracts the moment that produces the side load. In one prior art device, a curved spring is used to create a greater load on one side of the strut. In another prior art device, a metal spring seat is mounted on an angle and offset relative to the centerline of the strut. As with all vehicle components, it is desirable to provide a lightweight, inexpensive design. However, lightweight spring seats are difficult to manufacture inexpensively while obtaining a design that may be mounted on the strut at an angle.

### SUMMARY OF THE INVENTION AND ADVANTAGES

The present invention provides a MacPherson strut assembly that has a hydraulic cylinder with a fluid chamber. A piston is arranged in the chamber, and a rod extends from the piston. A lower spring seat is supported on the hydraulic cylinder, and an upper spring seat is supported on the rod. A coil spring is arranged between the spring seats to produce a desired spring loading. In one embodiment, a compliant isolator having a sloped profile is arranged on the lower spring seat to produce an uneven spring loading. In another embodiment, a spring seat isolator may include materials of a different stiffness to produce uneven spring loading. An isolator may also be used between coils of the spring so that the compression on one side of the spring is limited more that the opposite side to produce uneven loading.

Accordingly, the above invention provides a lightweight, inexpensive strut that generates uneven spring loading to produce a counteracting moment.

### BRIEF DESCRIPTION OF THE DRAWINGS

Other advantages of the present invention can be understood by reference to the following detailed description when considered in connection with the accompanying drawings wherein:
Figure 1 is a schematic side elevational view of a strut;
Figure 2A is a side elevational view of a lower spring seat and isolator;
Figure 2B is a top elevational view of the isolator shown in Figure 2A;
Figure 3A is a side elevational view of another lower spring seat and isolator;
Figure 3B is a top elevational view of the isolator shown in Figure 3A;
Figure 4A is a side elevational view of yet another lower spring seat and isolator;
Figure 4B is a top elevational view of the isolator shown in Figure 4A;
Figure 5A is a side elevational view of still another lower spring seat and isolator;
Figure 5B is a top elevational view of the isolator shown in Figure 5A;
Figure 6 is a top elevational view of an isolator having multiple stiffnesses;
Figure 7 is a top elevational view of another isolator having multiple stiffnesses;
Figure 8 is a top elevational view of yet another isolator having multiple stiffnesses;
Figure 9 is a side elevational view of a coil spring isolator; and
Figure 10 is a side elevational view of another coil spring isolator.

### DETAILED DESCRIPTION OF THE PREFERRED EMBODIMENT

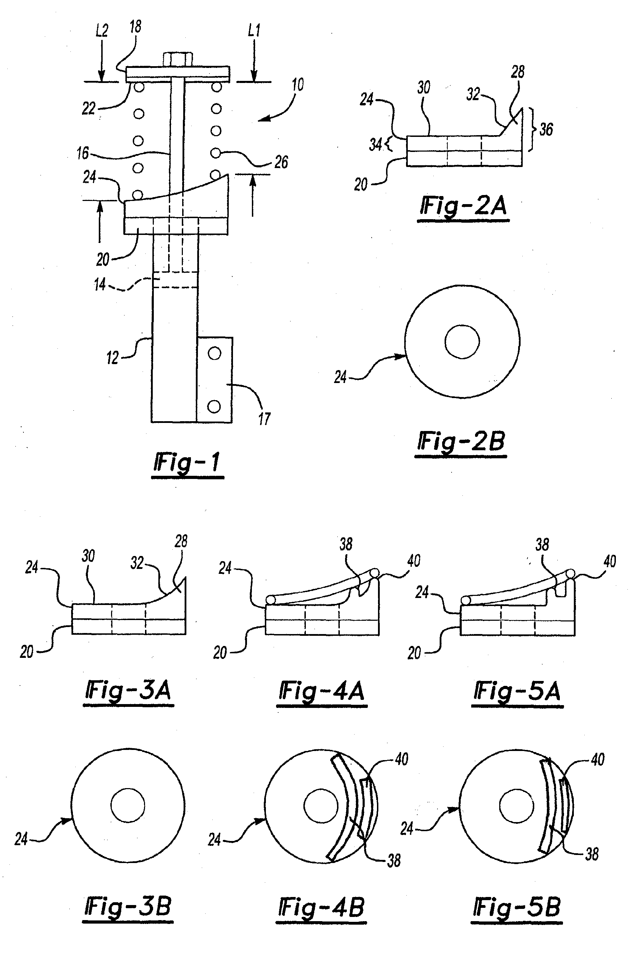

A strut 10 is schematically shown in Figure 1. The strut 10 includes a hydraulic cylinder 12 with a fluid chamber that has a piston 14 disposed therein, as is known in the art. A rod 16 extends from the piston 14 and is supported by the hydraulic cylinder 12 by a cylinder head (not shown). The hydraulic cylinder 12 includes an attachment 17 for receiving a knuckle that supports a wheel end. In a typical strut assembly, a side load is generated between the rod 16 and piston 14 and the hydraulic cylinder 12 due to moments on the strut 10.

An upper spring seat 18 is supported on the rod 16, and the hydraulic cylinder 12 supports a lower spring seat 20. A coil spring 26 is arranged between the spring seats 18, 20 and produces a spring loading. Compliant rubber or urethane isolators 22, 24 may be used between the spring 26 and the spring seats 18, 20. Prior art isolators have a uniform thickness and are used to reduce strut noise. At least one present invention isolator, preferably the lower, is used in conjunction with a spring seat that is attached generally normal to the strut centerline. The isolators may be inexpensively molded to any desired shape using any suitable material.

The present invention isolator 24 includes a sloped surface 32 that curves from a first portion 30 upward toward a second portion 28, best shown in Figures 2A-5B, to generate uneven spring loading to produce a counteracting moment. The first portion 30 has a first thickness 34 that is less than a second thickness 36 of the second portion. As a result, the spring 26 is compressed to a shorter length Ll on one side producing a greater spring force than on the opposing side, which has a length L2.

The surface 32 may have a sharp curve, as shown in Figures 2A-2B, or a more gentle, sloping curve, as shown in Figures 3A-3B. Alternatively, one or more arcuate ridges 38, 40 may extend outwardly from the isolator 24 to reduce the weight and cost of the isolator. As shown in Figures 4A-4B, the ridges 38, 40 may extend circumferentially about a large portion of the isolator, or a reduced portion of the isolator, as shown in Figures 5A-5B. The size, shape, and location of the thicker portion of the isolator may be determined based upon the particular strut geometry and loading.

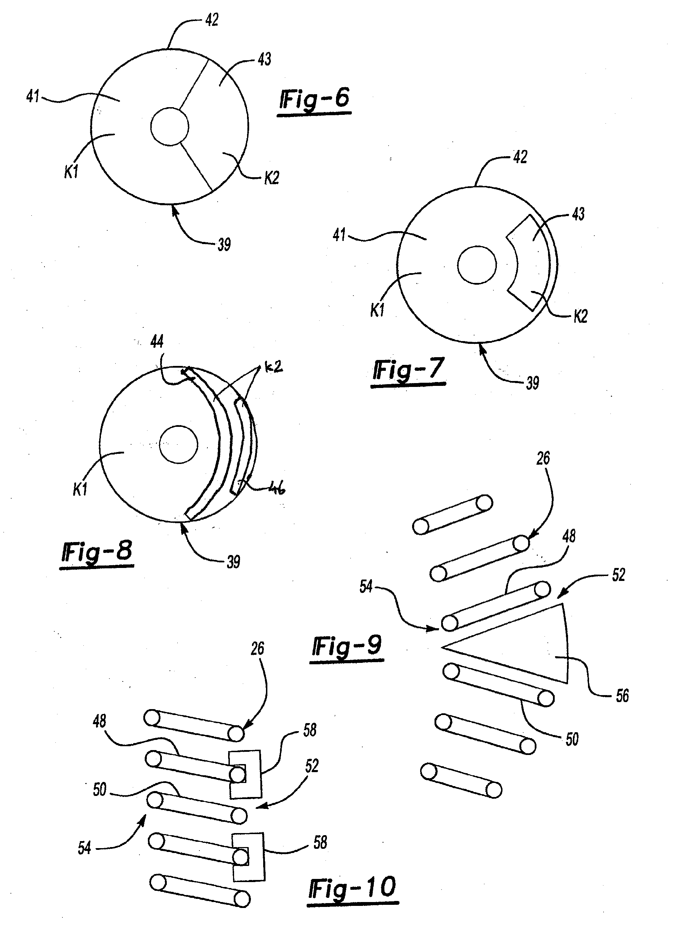

A similar effect to that described above may be achieved by using an isolator having multiple materials having a different stiffness, as shown in Figures 6-8. An isolator 39 includes a first portion 41 having a first stiffness k1. A second portion 43 has a second stiffness k2 that is stiffer that the material used for the first portion 41. As a result, a greater spring force will be generated in the area of the second portion 43. The second portion may extend to the perimeter 42 of the isolator, as shown in Figure 6, or may be spaced from the perimeter 42, as shown in Figure 7. Referring to Figure 8, a number of second portions 44, 46 may be arranged in an arcuate pattern to provide an effect similar to that shown in Figures 4A-5B. Increasingly stiffer materials may be used as the radial distance is increased. Preferably, the first and second portions of the isolator of figures 6, 7 or 8 have substantially the same thickness.

Referring to Figures 9 and 10, an isolator may be used between first and second coils 48, 50 of the spring 26. The isolator keeps the coils 48, 50 spaced farther apart on one side 52 than the other side to generate uneven spring loading. As shown in Figure 9, an isolator having a wedge-shaped cross-section may be arranged between the coils 48, 50. Alternatively, one or more C-shaped isolators 58 may be clipped to the coils of the spring 26.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A MacPherson strut assembly (10) comprising:
a hydraulic cylinder (12) having a fluid chamber with a piston (14) disposed therein and a rod (16) extending from said piston;
a lower spring seat (20) supported on said hydraulic cylinder;
an upper spring seat (18) supported on said rod;
a coil spring (26) arranged between said spring seats; and
a compliant isolator (24) supported on one of said spring seats between said spring and said one of said spring seats, said isolator having a first portion (30) defining a first vertical length to said other of said spring seats and a second portion (28) raised relative to said first portion defining a second vertical length to said other of said spring seats, said second vertical length less than said first vertical length.

2. The assembly according to claim 1, wherein said isolator includes a curved surface (32) supporting said spring, and a first thickness (34) defining said first portion and a second thickness (36) defining said second portion with said first thickness less than said second thickness.

3. The assembly according to claim 1 or 2, wherein at least one arcuate ridge (38, 40) extending away from said one of said spring seats defines said second portion.

4. The assembly according to claim 3, wherein said arcuate ridge extends circumferentially less than 180° in spaced relation to said rod.

5. The assembly according to any preceding claim, wherein said isolator is constructed from a rubber material, or a urethane material.

6. The assembly according to any preceding claim, wherein said one of said seats is mounted generally normal to a strut centerline.

7. A MacPherson strut assembly (10) comprising:
a hydraulic cylinder (12) having a fluid chamber with a piston (14) disposed therein and a rod (16) extending from said piston;
a lower spring seat (20) supported on said hydraulic cylinder;
an upper spring seat (18) supported on said rod;
a coil spring (26) arranged between said spring seats; and
an isolator (39) supported on one of said spring seats between said spring and said one of said spring seats, said isolator having first (41) and second (43) portions respectively including first (K1) and second (K2) stiffnesses with said first stiffness less than said second stiffness, and said second stiffness creating a greater spring load at said second portion than a lesser spring load at said first portion.

8. The assembly according to claim 8, wherein said first and second portions are respectively constructed from first and second materials that are different than one another.

9. The assembly according to claim 7 or 8, wherein said first and second portions extend radially to a perimeter (42) of said isolator.

10. The assembly according to claim 7 or 8, wherein one of said portions is spaced radially inward from a perimeter of said isolator.

11. The assembly according to any one of claims 7 to 10, wherein said second portion is defined by at least one arcuate segment spaced from said rod.

12. A MacPherson strut assembly (10) comprising:
a hydraulic cylinder (12) having a fluid chamber with a piston (14) disposed therein and a rod (16) extending from said piston;
a lower spring seat (20) supported on said hydraulic cylinder;
an upper spring seat (18) supported on said rod;
a coil spring (26) arranged between said spring seats, said spring having first (48) and second (50) spaced apart coils with first and second opposing sides; and
an isolator (56, 58) arranged between said first and second coils, said isolator defining a first distance between said coils on one side in a compressed spring state, and said isolator defining a second distance less than said first distance between said coils on said opposing side in said compressed spring state.

13. The assembly according to claim 12, wherein said isolator has a wedge-shaped cross-section.

14. The assembly according to claim 12, wherein said isolator has a generally C-shaped cross-section clamped about a portion at least one of said coils on said one side.
